# EUROPÄISCHE PATENTSCHRIFT

(11) **EP 2 613 998 B1**
(45) Veröffentlichungstag und Bekanntmachung des Hinweises auf die Patenterteilung: **12.08.2015**
(21) Anmeldenummer: 11757270.1
(22) Anmeldetag: 09.09.2011
(51) Int. Cl.: B62M 6/75

(54) **ANTRIEBSEINHEIT FÜR ZWEIRADFAHRZEUG**
DRIVE UNIT FOR A TWO WHEELER
UNITÉ D'ENTRAÎNEMENT POUR VÉHICULE À DEUX ROUES

(30) Priorität: 09.09.2010 DE 102010037435
(43) Veröffentlichungstag der Anmeldung: 17.07.2013
(73) Patentinhaber: Lang, Günter, 73249 Wernau (DE)
(72) Erfinder: Lang, Günter, 73249 Wernau (DE)
(74) Vertreter: Rüger, Barthelt & Abel
(86) Internationale Anmeldenummer: PCT/EP2011/065685
(87) Internationale Veröffentlichungsnummer: WO 2012/032172

(56) Entgegenhaltungen:
- CA-A1- 2 384 016
- FR-A- 867 489
- TW-A- 200 951 021
- US-A- 2 375 508
- US-E1- R E37 583

## Beschreibung

Die Erfindung betrifft eine Antriebseinheit für ein Zweiradfahrzeug das, zumindest teilweise, elektrisch angetrieben werden soll.

Beispielsweise aus der DE 20 2009 014 347 U1 ist ein Fahrrad bekannt, das zusätzlich zu dem vorhandenen Tretkurbelantrieb einen auf das Hinterrad wirkenden Elektromotor aufweist, dessen Leistung den Fahrer unterstützt. Der Elektromotor ist in der hinteren Radnabe untergebracht.

Auch die DE 602 09 510 T2, die sich vor allem mit der Steuerung des Elektromotors bei einem Fahrrad befasst, favorisiert einen Radnabenantrieb.

Zwar stellen Radnabenantriebe an Fahrrädern eine gängige Lösung für die Bewerkstelligung eines Hilfsantriebs oder zuweilen auch eines Hauptantriebs dar, jedoch haben sie ein erhebliches Gewicht und sie erfordern entweder den Austausch oder das Umspeichen des mit einem Antrieb zu versehenden Rades. Sie eignen sich deshalb wenig für Nachrüstzwecke. Insbesondere ist die Kombination mit einer bei sportlichen Fahrrädern vorhandenen und bei sportlich orientiertem Fahren beliebten Kettenschaltung nicht uneingeschränkt oder nur schwierig möglich.

Aus der CA 2 384 016 A1 ist eine Antriebseinheit für ein elektrisch angetriebenes oder unterstütztes Zweiradfahrzeug bekannt, mit einem Zahnkranz, der eine Verzahnung aufweist und mit Rad-Verbindungsmitteln zum Anschluss an ein Fahrrad versehen ist. Weiter ist ein Motorträgez vorgesehen, der mit einem Abstützmittel zum Anschluss an einen Fahrzeugrahmen versehen ist. Auf dem Motorträger ist ein Elektromotor angeordnet. Der Elektromotor treibt ein Ritzel an, das eine zu der Verzahnung des Zahnkranzes passende Verzahnung aufweist und dem Zahnkranz betriebsmäßig zugeordnet ist.

Gerade sportlich orientierte Radfahrer sind häufig im Besitz hochwertiger Fahrräder, bei denen, wenn ein elektrischer Antrieb oder eine elektrische Antriebsunterstützung angebracht werden soll, ein wie auch immer gearteter Einbau von Radnabenantrieben nicht in Frage kommt. Auch kann es dem Fahrer lästig sein, dass der elektrische (Hilfs-)Antrieb die freie Raddrehung auch dann hemmt, wenn der Motor stromlos ist, also weder als Motor noch als Generator läuft. Dies gilt insbesondere für die wegen ihres hohen Wirkungsgrades beliebten Motoren mit Permaneterregung.

Davon ausgehend ist es Aufgabe der Erfindung, einen nachrüstbaren elektrische Hilfsantrieb für ein Zweiradfahrzeug, insbesondere ein Fahrrad, zu schaffen.

Diese Aufgabe wird mit der Antriebseinheit nach Anspruch 1 gelöst:
Zu der erfindungsgemäßen Antriebseinheit gehören ein Zahnkranz zur Befestigung an einem Rad des Fahrzeugs, ein Führungsprofil, das ebenfalls mit dem Rad des Fahrzeugs zu verbinden ist, ein Motorträger zur Verbindung mit dem Fahrzeugrahmen sowie ein von dem Motorträger getragener Elektromotor mit einem Antriebsritzel, das mit dem Zahnkranz in dauerndem Eingriff steht oder mit diesem in und außer Eingriff überführbar ist, wobei wenigstens ein Führungsrad vorgesehen ist, das an dem Motorträger drehbar gelagert ist und auf dem Führungsprofil läuft.

Mit diesem Konzept wird ein an Zweiradfahrzeugen einfach nachrüstbares System geschaffen. Die Antriebseinheit kann sowohl an dem vorderrad, wie auch zusätzlich oder alternativ an dem Hinterrad des Zweiradfahrzeugs angeordnet werden. Es ist sowohl möglich, die Antriebseinheit auf einer rechten Radseite wie auch auf einer linken Radseite vorzusehen. Bedarfsweise können entsprechende Antriebseinheiten auf beiden Radseiten angeordnet werden.

Bei der erfindungsgemäßen Antriebseinheit fährt der Motorträger mit einem oder mehren Führungsrädern auf dem Führungsprofil, wodurch, unabhängig von sonstigen Gegebenheiten, der korrekte Eingriff der Verzahnung des Antriebsritzes mit der Verzahnung des Zahnkranzes sichergestellt wird. Dies erleichtert die Montage des Zahnkranzes und des Führungsprofils an dem Rad einerseits und andererseits die Montage des Motorträgers an dem Fahrzeugrahmen erheblich. Der motorträger richtet sich an dem Führungsprofil aus. Sollte das Antriebsrad einen geringen an sich zulässigen Rundlauffehler, zum Beispiel einen seitlichen "Schlag" haben, kann der Motorträger diesem folgen, ohne dass dadurch die Eingriffsverhältnisse zwischen dem Antriebsritzel und dem Zahnkranz leiden würden. Auch dynamische verformungsbedingte (z.B. belastungsbedingte) Änderungen der Abstände zwischen Rad und Rahmenteilen können auf diese Weise leicht ausgeglichen werden. Damit eignet sich die erfindungagemäße Antriebseinheit insbesondere für Zweiräder im sportlichen Einsatz, wie es beispielsweise Mountainbikes sind, ohne darauf beschränkt zu sein.

Außerdem kann die erfindungsgemäße Antriebseinheit an Zweirädern mit ungefedertem Rahmen, wie auch an Zweirädern mit gefedertem Rahmen eingesetzt werden. Die Befestigung des Motorträgers erfolgt an dem Rahmen des Fahrzeugs, wobei "Rahmen" auch bewegliche, gefederte oder ungefederte Teile, wie beispielsweise eine gefederte oder ungefederte Gabel oder eine Hinterradschwinge verstanden werden. Beim Einsatz der Antriebseinheit zum Antrieb des Hinterrades und der Befestigung an einer gefederten Schwinge ergibt sich gegenüber einem Radnabenantrieb ein weiterer Vorteil. Selbst wenn der Motorträger nebst Motor das gleiche Gewicht aufweist wie ein herkömmlicher Radnabenantrieb, kann der Elektromotor näher am Drehzentrum (Schwingenlager) der Hinterradschwinge angeordnet werden, als es bei einem Radnabenmotor der Fall ist. Somit sinkt die an der Hinterradachse wirksame ungefederte Masse. Der Effekt ist wegen des quadratischen Zusammenhangs zwischen Massenträgheitsmoment und Radius des Abstands des Schwerpunkts der ungefederten Masse vom Drehzentrum erheblich.

Bei der erfindungsgemäßen Antriebseinheit handelt es sich somit um eine leicht nachrüstbare, selbstgeführte Antriebseinheit, denn die Motoreinheit mit Motorträger-Elektromotor, Antriebsritzel und Führungsrad (bzw. Führungsrädern) fährt auf dem Zahnkranz und dem Führungsprofil und wird von diesem geführt. Die Führungsprofilen bilden Führungsschienen, auf denen die Motoreinheit fährt. Dazu ist die Motoreinheit vorzugsweise beweglich an dem Fahrzeugrahmen gelagert. Die bewegliche Lagerung dient vorzugsweise allein der Abstützung des Antriebsmoments.

Der Zahnkranz und/oder das Führungsprofil sind über entsprechende Rad-Verbindungsmittel, vorzugsweise zum Anschluss an Speichen, des mit dem Hilfsantrieb zu versehenden Rads versehen. Beispielsweise können dazu in Langlöchern des Zahnkranzes sitzende Klemmschraube vorgesehen werden mit denen der Zahnkranz an die Speichen des betreffenden Rads anzuschrauben ist. Andere Befestigungsmöglichkeiten können ergänzend oder alternativ vorgesehen werden.

Vorzugsweise sind der Zahnkranz und das Führungsprofil an einem scheibenförmigen, dem Rad zugeordneten Träger vorgesehen und an diesem konzentrisch zueinander ausgebildet oder angeordnet. Vorzugsweise sind dabei an dem Träger mindestens zwei Führungsprofile vorgesehen, deren Lauffläche bezüglich der Radialrichtung voneinander weg weisen. Die auf diesen beiden verschiedenen Führungsprofilen laufenden Führungsräder der Motoreinheit können auf diese Weise nicht nur die korrekte radiale und axiale Orientierung des Motorträgers, sondern darüber hinaus auch die Abstützung von Kippmomenten bewirken, die beispielsweise an der Motoreinheit angreifen, wenn aufgrund holpriger Wegstrecke Vertikalbeschleunigungen auf das Fahrzeug und/oder die Motoreinheit einwirken.

Vorzugsweise ist die Antriebsverbindung zwischen dem Elektromotor und dem Zahnkranz willkürlich trennbar, beispielsweise indem der Zahneingriff zwischen dem Antriebsritzel und dem Zahnkranz gelöst wird, beispielsweise durch axiales Ausrücken des Antriebsritzels, oder durch Lösen einer entsprechend vorgesehenen Kupplung. Dadurch wird es möglich, das Fahrrad wahlweise ohne elektrische Unterstützung oder Bremsung zu fahren. Dies kommt insbesondere sportlich orientierten Fahrern entgegen, wenn diese zum Beispiel bei Bergauffahrt ohne Unterstützung fahren wollen, oder aufgrund einer leeren Batterie fahren müssen. Auch kann auf diese Weise bei Bergabfahrt die Bremswirkung der Antriebseinheit beseitigt werden, die ansonsten auch zur Engergierekuperation genutzt werden könnte.

Weiterer Einzelheiten vorteilhafter Ausführungsformen der Erfindung sind Gegenstand der Zeichnung, der Beschreibung oder von Unteransprüchen. Die nachfolgende Beschreibung beschränkt sich auf wesentliche Aspekte der Erfindung, ihrer Anwendung und zugehöriger Aspekte. Es zeigen:
Figur 1 - ein mit einer erfindungsgemäßen Antriebseinheit ausgerüstetes Fahrrad, in seitlicher Perspektivdarstellung,
Figur 2 - das Fahrrad nach Figur 1 mit erfindungsgemäder Antriebseinheit, in einer weiteren Perspektivdarstellung,
Figur 3 - das Hinterrad des Fahrrad nach Figur 1 und 2 mit erfindungsgemäßer Antriebseinheit, in ausschnittsweiser, schematisierter Darstellung,
Figur 4 - die Antriebseinheit in schematisierter Vertikalschnittdarstellung, in aktivem Zustand,
Figur 5 - die Antriebseinheit nach Figur 4, in passivem Zustand,
Figur 6 und 7 - Einzelheiten des Kupplungsmechanismus der Antriebseinheit, in schematisierter Schnittdarstellung,
Figur 8 - die Antriebseinheit, in schematischer Darstellung zur Veranschaulichung ihrer Abstützung,
Figur 9 - die Antriebseinheit nach Figur 8, in Draufsicht,
Figur 10 - eine alternative Ausführungsform der erfindungsgemäßen Antriebseinheit, in schematisierter Seitenansicht,
Figur 11 - die Antriebseinheit nach Figur 10 in schematisierter ausschnittsweiser Vertikalechnittdarstellung,
Figur 12 - eine Ausführungsform der Antriebseinheit zur Veranschaulichung möglicher Abwandlungen, in schematisierter ausschnittsweiser Vertikalschnittdarstellung,
Figur 13 - eine weitere Ausführungsform der Antriebseinheit zur Veranschaulichung mögliche Abwandlungen, in schematisierter ausschnittsweiser Vertikalschnittdarstellung, und
Figur 14 - noch eine Ausführungsform der Antriebseinheit zur Vezanschaulichung möglicher Abwandlungen, in schematisierter ausschnittsweiser Vertikalschnittdarstellung.

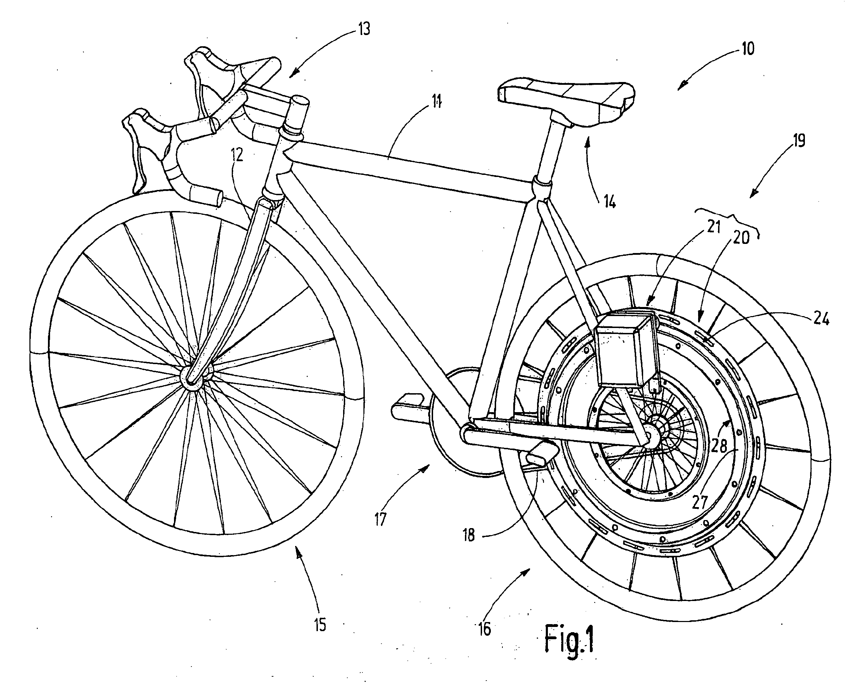

In Figur 1 ist ein Fahrrad 10 veranschaulicht, das die üblichen Komponenten, nämlich Rahmen 11, Gabel 12, Lenker 13, Sattel 14 sowie Vorderrad 15 und Hinterrad 16 aufweist. Zum manuellen Betrieb ist eine Tretkurbel 17 vorgesehen, die über eine Kette 18 auf das Hinterrad 16 wirkt. Vorzugsweise ist das Fahrrad 10 mit einer nicht weiter veranschaulichten Gangschaltung, vorzugsweise in Gestalt einer Kettenschaltung, versehen. Es kann auch eine Nabenschaltung vorgesehen sein, die in der Hinterradnabe und/oder in der Tretkurbel 17 angeordnet ist.

Das Vorderrad 15 und/oder das Hinterrad 16 ist mit einer erfindungsgemäßen Antriebseinheit 19 versehen, die als Hilfsantrieb oder bedarfsweise auch als Hauptantrieb, d.h. streckenweise oder ganz, als alleiniger Antrieb dienen kann. Die Antriebseinheit 19 ist elektrisch betrieben. Ein zugehöriger Energiespeicher ist in Figur 1 nicht weiter veranschaulicht. Es kann sich dabei um einen geeigneten Akkumulator, wie beispielsweise ein Lithiumionenakku oder ähnliches handeln. Außerdem kann die entsprechende Energieversorgungseinheit Speichermittel umfassen, die insbesondere zum temporären schnellen Zwischenspeichern, beispielsweise von Bremsenergie, geeignet sind. Solche Speichermittel sind, zum Beispiel elektrische Doppelschichtkondensatoren, die auch als Superkondensatoren bekannt sind. Eine elektrische oder elektronische Steuereinheit kann dazu dienen, den Energiefluss zu der Antriebseinheit 19 und, wenn beim Bremsen oder bergab Fahren Energie zurück gewonnen werden soll, von der Antriebseinheit 19 zu regulieren. Dieser Energiefluss lässt sich, je nach Ausführungsform, zum Beispiel über Stellglieder an dem Lenker 13 oder auch durch Betätigung der Tretkurbel 17 steuern, beispielsweise wenn dort das Antriebs- oder Bremsmoment erfasst und zur Steuerung herangezogen wird.

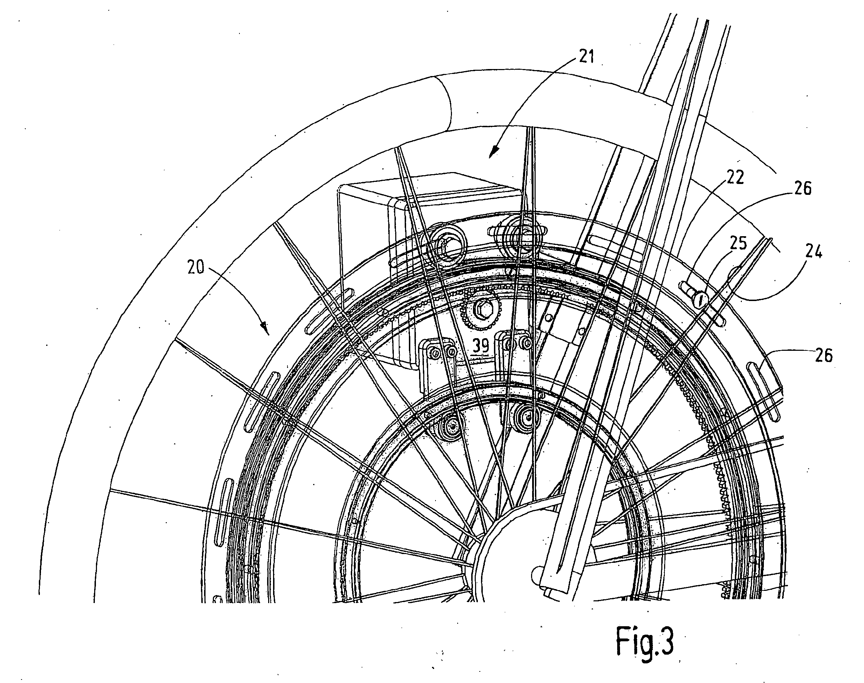

Zu der Antriebseinheit 19 gehört eine Radeinheit 20 und eine Motoreinheit 21. Zur Verdeutlichung wird auf die Figuren 1 - 3 verwiesen. In Figur 3 ist die Radeinheit 20 transparent dargestellt, um auch den Blick auf die Motoreinheit 21 freizugeben.

Zu der Radeinheit 20 gehört eine Ringscheibe 22 (Figur 29), die drehfest mit dem Hinterrad 16 verbunden ist. Die Ringscheibe 22 ist dabei vorzugsweise konzentrisch zu der Achse der Hinterrads 16 angeordnet. Durch geeignete Rad-Verbindungsmittel 23 ist die Ringscheibe 22 vorzugsweise mit den Speichen 24 des Hinterrads 16 verbunden. Radverbin-, dungsmittel 23 können Schrauben 25 sein, die an der Ringscheibe 22 vorgesehene Langlöcher 26 durchgreifen, und mit ihren Köpfen die Scheibe 22 gegen die Speiche 24 klemmten können (Figur 3).

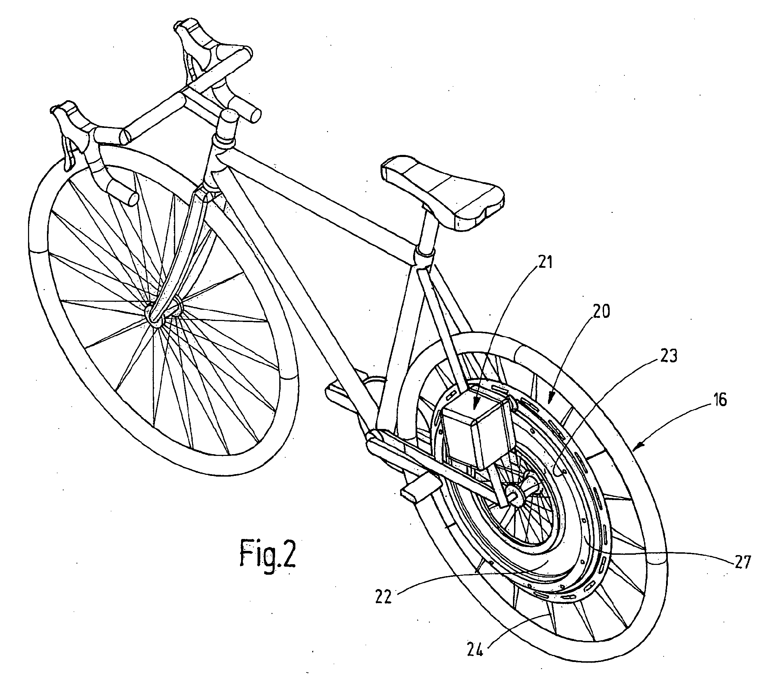

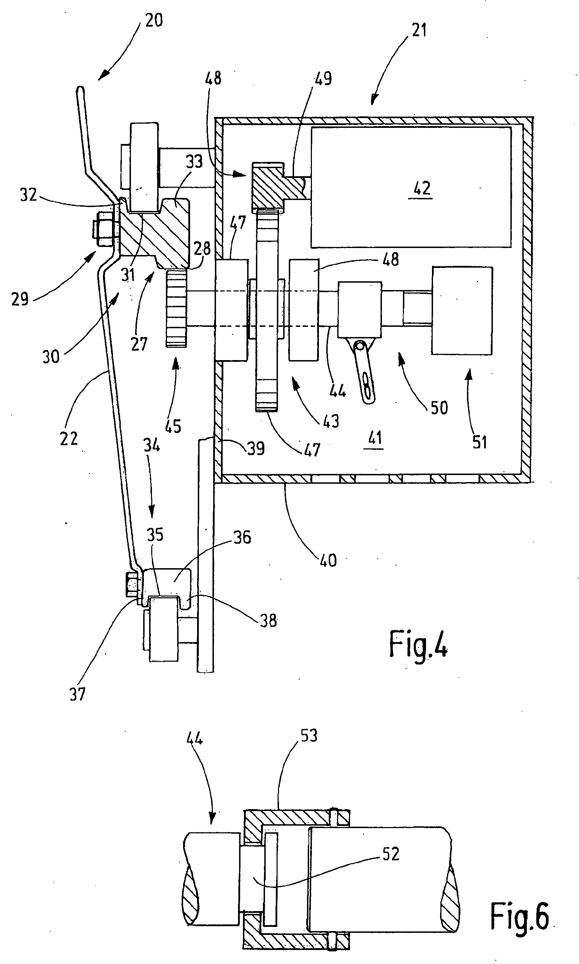

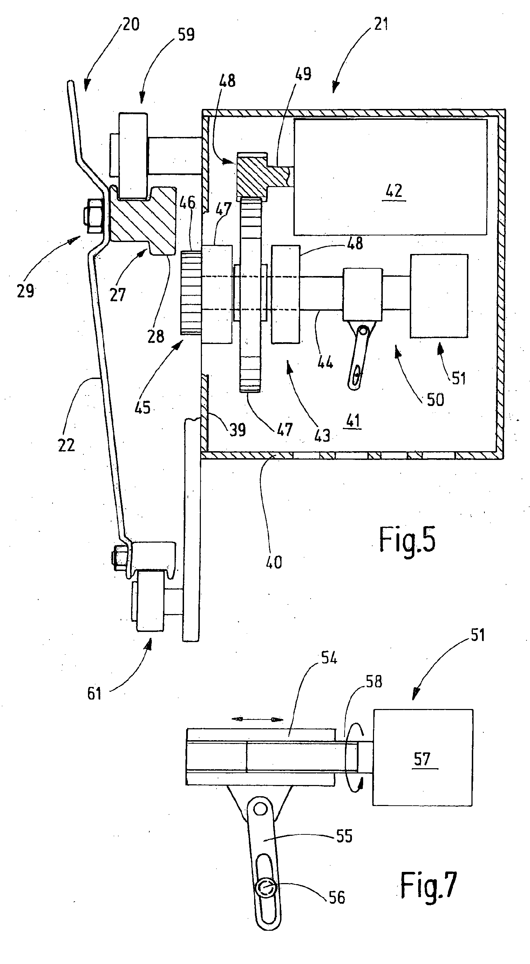

Wie schon aus den Figuren 1 und 2 und insbesondere auch aus den Figuren 4 und 5 hervorgeht, trägt die konzentrisch zu der Radachse angeordnete Ringscheibe 22 einen zu der Radachse konzentrisch angeordneten Zahnkranz 27, der im Ausführungsbeispiel mit einer radial nach innen weisenden Verzahnung 28 versehen ist. Falls gewünscht kann die Verzahnung 28 jedoch auch radial nach außen weisen. Der Zahnkranz 27 kann mit der Ringscheibe 22 einteilig ausgebildet sein. Er kann jedoch, wie in den Figuren 4 und 5 angedeutet, auch separat gefertigt und durch geeignete Verbindungsmittel, beispielsweise Schrauben 29, mit dieser verbunden sein.

Die Radeinheit 20 weist außerdem mindestens ein Führungsprofil 30 auf, das im vorliegenden Ausführungsbeispiel durch eine zum Beispiel zylindrische Lauffläche 31 gebildet ist. Diese kann an der radial von der Verzahnung 28 wegweisenden Seite des Zahnkranzes 27 angeordnet sein. Die Laufbahn 31 kann von der Zylinderform abweichen. Außerdem kann sie an einem oder an beiden Seiten mit Rändern 32, 33 versehen sein.

Im vorliegenden Ausführungsbeispiel gehört zu der Radeinheit 20 ein zweites Führungsprofil 34, das durch eine zweite Laufbahn 35 gebildet wird. Das zweite Führungsprofil 34 kann ein mit der Ringscheibe 22 verbundenes Ringelement 36 sein. Vorzugsweise ist die Laufbahn 35 zylindrisch. Sie kann von der Zylinderform jedoch auch abweichen und optional an einer Seite oder an beiden Seiten mit Rändern 37, 38 versehen sein.

Der Zahnkranz 27 und das Ringelement 36 sind vorzugweise konzentrisch zueinander angeordnet. Im vorliegenden Ausführungsbeispiel weist das Ringelement 36 einen geringeren Durchmesser auf als der Zahnkranz 27. Die Verhältnisse können alternativ umgekehrt sein.

Vorzugsweise weisen die beiden Laufbahnen 31, 35 radial in unterschiedliche Richtungen, das heißt aufeinander zu oder voneinander weg. Letzteres zeigen die Figuren 4 und 5.

Der Radeinheit 20 ist die Motoreinheit 21 zugeordnet, zu deren grundsätzlicher Erläuterungen die Figuren 3 - 5 und im Weiteren die Figuren 6 - 9 in Bezug genommen werden.

Zu der Motoreinheit 21 gehört ein Motorträger 39, dem eine Haube 40 mit oder ohne Tragfunktion zugeordnet sein kann. Der von dem Motorträger 39 und/oder der Haube umschlossene Innenraum 41 beherbergt Antriebsmittel, zu denen mindestens ein Elektromotor 42 und bedarfsweise ein Getriebe 43 gehören. An dem Motor 39 ist eine Antriebswelle 44 drehbar gelagert, die durch den Motor 42 direkt, oder wie in den Figuren 4 und 5 dargestellt, über das Getriebe 43 angetrieben ist. Die Antriebswelle 44 trägt an einem außerhalb des Innenraums 41 liegenden Ende ein Antriebsritzel 45. Dieses weist eine zu der Verzahnung 28 passende Verzahnung 46 auf.

Zur drehbaren Lagerung der Antriebswelle 44 sind ein oder mehrere Lager 47, 48 vorgesehen, die in den Figuren 4 und 5 nur schematische angedeutet sind. Vorzugsweise gestatten sie ein axiales Verschieben der Antriebswelle 44 und lagern diese drehbar. Auf der Antriebswelle 44 kann ein Stirnrad 47 drehfest, aber axial verschiebbar, gesichert sein. Zu diesem Zweck kann die Welle 44 mit einer in einer Innenverzahnung des Stirnrads 47 greifenden Profilverzahnung versehen sein. Andere Mittel zur drehfesten Kopplung sind üblich und anwendbar.

Das Stirnrad 47 kämmt mit einem Motorritzel 48, das auf der Abtriebswelle 49 des Elektromotors 42 sitzt. Auf diese Weise wird die Drehung der Abtriebswelle 49 untersetzt auf die Antriebswelle 44 übertragen.

Zu der Motoreinheit 21 kann außerdem eine Schalteinheit 50 gehören, die dazu eingerichtet ist, den Kraftfluss von dem Elektromotor 42 auf den Zahnkranz 27 herzustellen oder zu unterbrechen. Die Schalteinheit 50 wirkt durch das Ein- und Ausrücken des Antriebsritzels 45 als Kupplung. Die Schalteinheit kann alternativ an jeder Stelle des Kraftflusswegs eine entsprechende Kupplung, beispielsweise eine Reibungskupplung oder eine formschlüssige Kupplung, wie beispielsweise eine Zahnkupplung, einen Klauenkupplung oder dergleichen, umfassen. Im vorliegenden Ausführungsbeispiel wird das Herstellen und Unterbrechen des Kraftflusswegs auf einfachste Weise durch Ein- und Auskuppeln des Zahneingriffs zwischen den Verzahnungen 28 und 46 bewirkt. Dazu wird die Antriebswelle 44 axial verschoben, um das Antriebsritzel 45 wie gewünscht in die Eingriffsposition nach Figur 4 oder die Ausrückposition nach Figur 5 zu überführen.

Die Schalteinheit 50 bewirkt im vorliegenden Ausführungsbeispiel die axiale Verschiebung der Antriebswelle 44. Dazu ist ein axialer Wellenantrieb 51 vorgesehen, für den verschiedenste Konstruktionsprinzipien Anwendung finden können. Lediglich beispielshalber wird dazu in Figur 6 veranschaulicht, wie das Ende der Antriebswelle 44 über eine nicht drehende, mit einer Ringnut 52 der Antriebswelle 44 in Eingriff stehenden Hülse 53 axial verschoben werden kann. Die Hülse 53 ist mit dem Axialstellantrieb 51 axial fest verbunden. Der Axialstellantrieb 51 kann zum Beispiel gemäß Figur 7 ausgebildet sein. In diesem Ausführungsbeispiel umfasst er eine Gewindehülse 54, die zum Beispiel über einen als Drehmomentstütze wirkenden Lenker 55 unverdrehbar gehalten ist. Dazu ist der Lenker 55 an der Gewindehülse 54 schwenkbar gelagert und seinerseits an dem Motorträger 39 schwenkbar gelagert. Dazu dient beispielesweise ein Bolzen 56 der ein Langloch des Lenkers 55 durchgreift. Andere Mittel zur axial beweglichen, dabei aber drehfesten Abstützung der Gewindehülse 54 sind anwendbar.

Zur Axialverstellung der Gewindehülse 54 kann ein Motor 57 dienen, dessen Abtriebswelle 58 mit einem Gewinde versehen ist, auf das die Gewindehülse 54 aufgeschraubt ist. Durch Drehung der Abtriebswelle 58 in positiver oder negativer Drehrichtung wird die Gewindehülse 54 in Figur 7 nach links oder rechts verschoben. Entsprechend kann die axial angekoppelte drehungsmäßig, jedoch entkoppelte Antriebswelle 44 axial gezielt verstellt werden, um den Zahneingriff zwischen dem Zahnkranz 27 und dem Antriebsritzel 45 herzustellen oder zu unterbrechen.

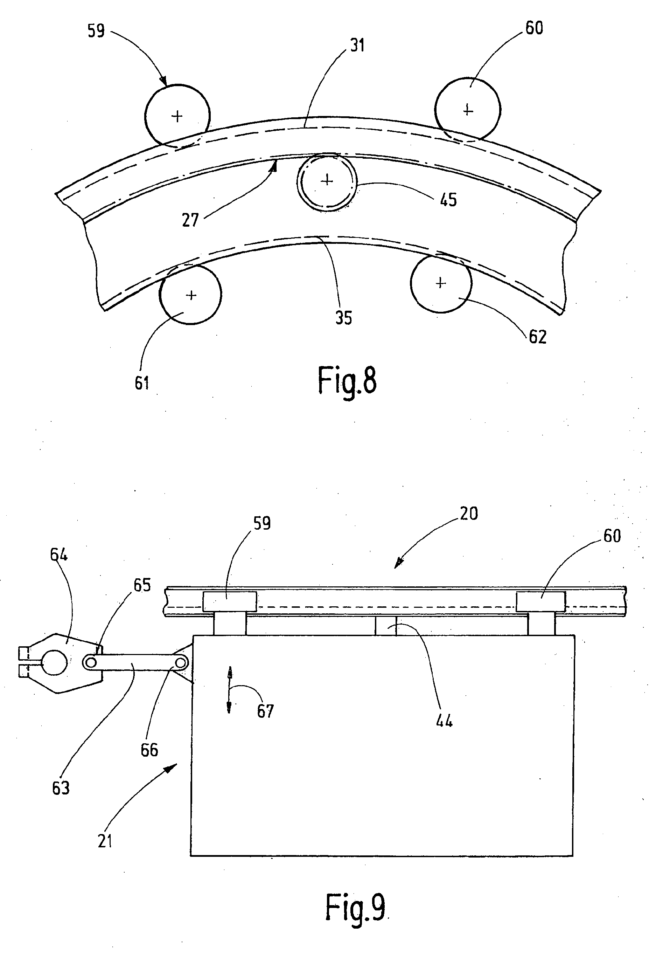

Wie aus Figur 3 und auch aus Figur 8 hervorgeht, gehören zu der Motoreinheit 21 mehrere, beispielsweise vier, Führungsräder 59, 60, 61, 62, die mit zueinander parallelen Drehachsen drehbar an dem Motorträger 39 gelagert sind. Zwei Führungsräder 59, 60 sind der Führungsbahn 31 zugeordnet. Zwei andere Führungsräder 61 , 62 sind der Führungsbahn 35 zugeordnet. Die vier Führungsräder 59 - 62 sind zum Beispiel an den Ecken eines Vierecks, zum Beispiel eines Rechtecks, angeordnet, dessen lange Kanten radauswärts gerichtet sind. Mit anderen Worten, der Abstand zwischen den Führungsbahnen 31, 35 ist, wie insbesondere aus Figur 3 hervorgeht, vorzugsweise größer als der Abstand zwischen jeweils der gleichen Führungsbahn 31 oder 35 zugeordneten Rollenbahnen 59, 60 bzw. 61, 62. Wie Figur 8 andeutet, können die Verhältnisse jedoch auch umgekehrt getroffen sein.

Wie Figur 9 veranschaulicht, ist die Motoreinheit 21 vorzugsweise beweglich an dem Rahmen 11 gelagert. Dazu dient zum Beispiel ein Lenker 63 der mit einer Rahmenklemmschelle 64 verbunden sein kann. Anstelle der Rahmenklemmschelle 64 können auch jegliche andere Mittel vorgesehen sein, die dazu geeignet sind, den Lenker 63 mit dem Rahmen 11 zu verbinden. Vorzugsweise ist der Lenker 63 über mindestens ein, besser zwei Gelenke 65, 66 mit der Rahmenklemmschelle 64 oder dem sonstigen Befestigungsmittel verbunden, um die Motoreinheit 21 mit seitlichem Freiheitsgrad, wie in Figur 9 durch ein Pfeil 67 angedeutet, zu lagern. Außerdem können die Gelenke 65, 66 bedarfsweise so beschaffen sein, dass die Motoreinheit 21 einen gewissen Freiheitsgrad in Radialrichtung aufweist. Sie ist deshalb vorzugsweise allein mittels der Führungsräder 59 - 62 an den Führungsbahnen 31, 35 gelagert.

Die insoweit beschriebene Antriebseinheit 19 arbeitet wie folgt:
In Betrieb ist die Motoreinheit 21 über die Führungsräder 59 - 62 an der Radeinheit 20 gelagert. Der Lenker 63 stützt die Motoreinheit 21 bezüglich der Umfangsrichtung der Radeinheit 20 ab. Es kann nun durch entsprechende Ansteuerung der Schalteinheit 50 das Antriebsritzel 45 in Eingriff mit dem Zahnkranz 27 überführt werden, wie es Figur 4 zeigt. Wird der Elektromotor 42 bestromt, dreht dieser über das Getriebe 43 die Antriebswelle 44 und treibt somit dem Zahnkranz 27 an. Das Fahrrad 10 erhält somit Antriebsleistung von dem Motor 42.

Gleichzeitig oder zusätzlich kann der Fahrer über die Tretkurbel 17 Antriebsmoment auf das Hinterrad 16 übertragen.

Bei eingerücktem Antriebsritzel 45 kann der Elektromotor 42 außerdem zur Gewinnung von Bremsenergie eingesetzt werden. Der Elektromotor 42 wird dazu im Generatorbetrieb betrieben. Dieser Betrieb kann durch Betätigung einer Fahrradbremse, durch Rückwärtstreten der Tretkurbel 17 oder durch andere geeignete Maßnahmen eingeleitet werden.

Es ist auch möglich, dass der Fahrer wünscht, die Antriebseinheit 19 inaktiv werden zu lassen. Er kann zu diesem Zweck, zum Beispiel durch ein geeignetes manuell zu betätigende Schaltmittel oder durch eine Automatik, das Auskuppeln der Motoreinheit 21 veranlassen. Erfasst die nicht weiter veranschaulichte Steuerung eine solche Auskupplungsanforderung betätigt sie die Schalteinheit 52 so, dass diese Antriebswelle 44 aus der im Figur 4 veranschaulichten Position in die in Figur 5 veranschaulichte Position überführt. Damit wird das Antriebsritzel 45 außer Eingriff gebracht und von dem Zahnkranz 27 getrennt. Das Fahrrad kann nun ohne bremsende Wirkung der Antriebseinheit 19 wie ein normales Fahrrad frei gefahren werden. Dies ist insbesondere bei leerer Batterie sinnvoll oder bei Bergabfahrt, wenn eine bremsende Wirkung der Antriebseinheit ebenso wenig gewünscht ist, wie eine zusätzliche Antriebsanwirkung.

Es sind an der vorgestellten Antriebseinheit zahlreiche Abwandlungen möglich. Bei der vorgestellten Antriebseinheit ergibt sich wegen des relativ großen radialen Abstands der Führungsbahnen 31, 35 eine gute Kippmomentabstützung der Motoreinheit 21 allein an der Radeinheit 20. Überfährt das Fahrrad 40 schlechte Wegstrecken und wirken somit vertikale Beschleunigungskräfte auf die Motoreinheit 21 ein, werden diese von den Führungsbahnen 31, 35 übernommen.

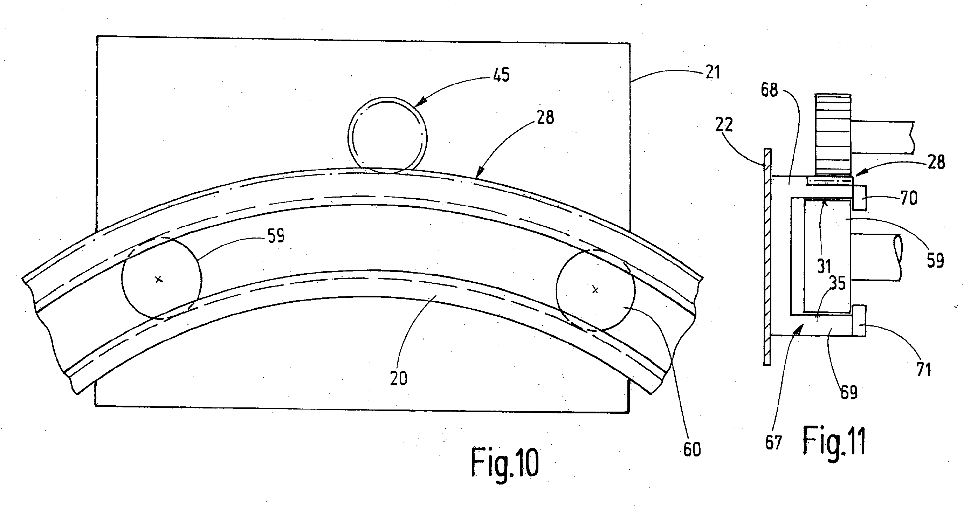

Ist es hingegen das Ziel, mit möglichst wenig Führungsrädern auszukommen, kann die Anordnung nach Figur 10 und 11 gewählt werden. Dort ist an der Ringscheibe 22 ein Ringkörper 67 angeordnet, der ein U-Profil aufweist. Die Führungsbahnen 31, 35 sind dort an den aufeinander zuweisenden Seiten seiner Schenkel 68, 69 angeordnet. Zur Abstützung des Antriebsmoments der Motoreinheit 21 an der Radeinheit 20 genügen hier zwei Führungsräder 59, 60. Die Verzahnung 28 kann an einer Außenseite eines der Schenkel 68 oder 69 ausgebildet sein. Das Antriebsritzel kann wiederum mit dieser Verzahnung kämmen.

Zur besseren Führung der Führungsräder 59, 60 in den Ringkörper 67 können die Schenkel 68, 69 zu der Motoreinheit 21 hin mit Abschlussringen 70, 71 versehen sein, die die Führungsräder 59, 60 hintergreifen. Ansonsten gilt die vorherige Beschreibung entsprechend.

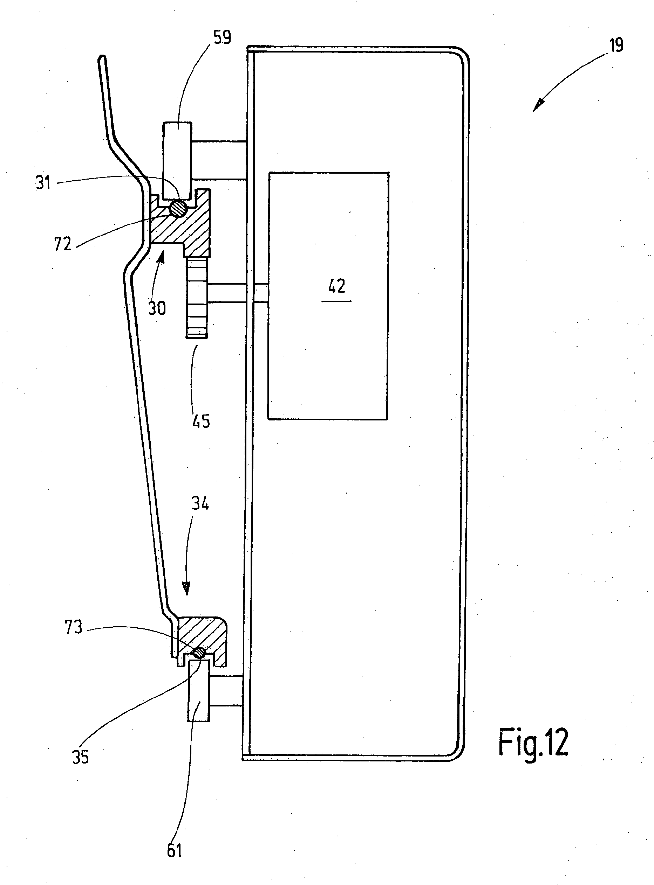

Figur 12 zeigt eine Ausführungsform der Antriebseinheit 19, bei der die beiden Führungsprofile 30, 34 Metallschienen 72, 73 enthalten, an denen die Laufbahnen 31, 35 ausgebildet sind. Die Metallschienen 72, 73 haben vorzugsweise ein gerundetes Querschnittsprofil, so dass sich ein geringer Rollwiderstand für Rollen 59, 61 ergibt. Diese können z.B. zylindrisch sein. Sie können auch eine sich in Umfangsrichtung erstreckende Laufrille aufweisen. Metallschienen der genannten oder ähnlicher Art können bei allen Ausführungsformen der Erfindung zur Anwendung kommen. Das Ritzel 45 kann bei dieser Ausführungsform wie auch bei den anderen Ausführungsformen ohne Vorgelege von dem Motor 42 direkt angetrieben sein. Das Ein- und Auskuppeln des Motors 42 kann durch eine nicht weiter dargestellte Kupplung erfolgen. Die Kupplung kann jeder geeignete Bauart aufweisen. Insbesondere kann es eine formschlüssige Kupplung sein. Vorzugsweise wird die Kupplung jedoch durch das axiale Ein- und Ausrücken des Ritzels 45 gebildet. Das Ritzel 45 kann dazu auf seiner Welle, mit der es drehfest verbunden ist, axial verschiebbar angeordnet sein, um z.B. manuell verschoben zu werden. Alternativ kann die gesamte aus Motor 42 und Ritzel 45 bestehende Einheit (vorzugsweise manuell) axial verschiebbar angeordnet sein.

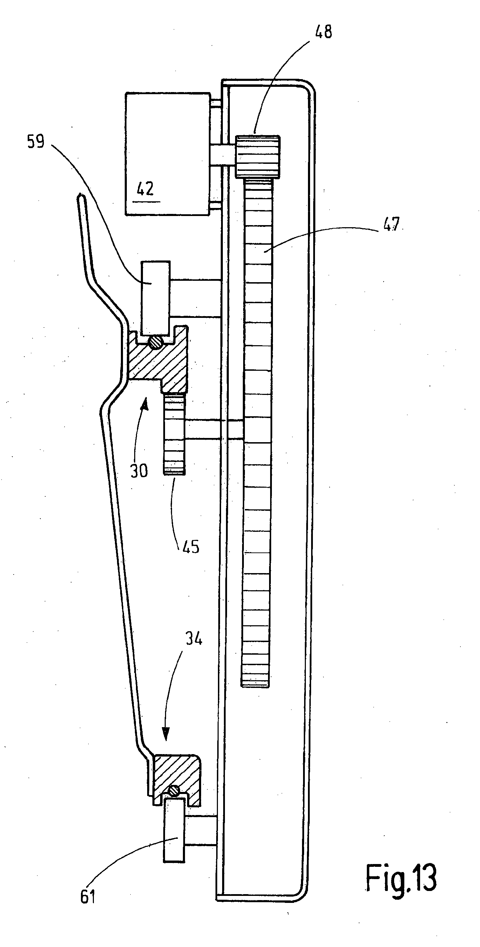

Wie weiter Figur 13 zeigt, ist es auch möglich, dafür zu sorgen, dass der Motor 42 in einer Flucht mit den Führungsprofilen 30, 34 liegt. Sein Schwerpunkt liegt ohne relevante Abweichung in einer Ebene mit den Führungsprofilen 30, 34. Dadurch werden Vertikalstöße, die auf das Fahrzeug einwirken, kaum in Biegemomente umgesetzt, die von der Führung aufzunehmen wären. Die Führung besteht aus den Führungsprofilen 30, 35 und den auf ihnen laufenden Rollen. Das Einund Auskuppeln erfolgt wiederum durch eine Geeignete Kupplung oder durch (vorzugsweise manuelle) Verschiebung eines der Zahnräder, insbesondere des Zahnrads 45. Für die Ausbildung der Rollen 59, 61 und Führungsprofile 30, 34 sind alle vorgenannten Möglichkeiten nutzbar.

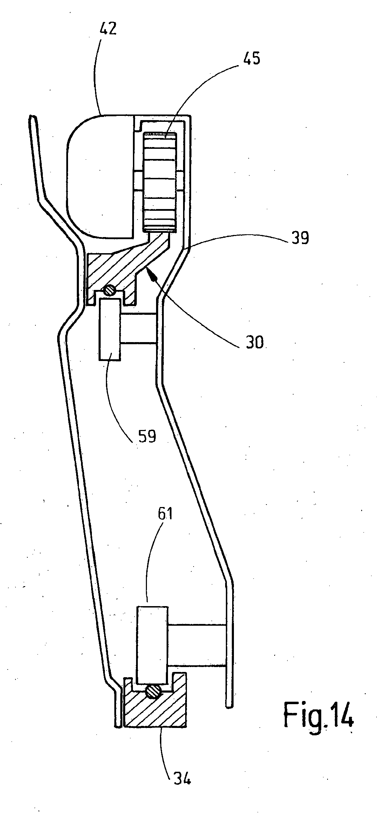

Figur 14 verdeutlicht, dass weitere Abwandlungen möglich sind. Z.B. können die Rollen 59, 61 zwischen den Führungsprofilen 30, 34 angeordnet sein. Der Zahnkranz 28 kann an der radial äußeren Seite der radial äußeren Führungsschiene 30 angeordnet sein. Der Motor 42 kann wie dargestellt auf der Radseite des Trägers 39 oder auch auf der radabgewandten Seite desselben angeordnet sein. Für das Ein- und Auskuppeln sind alle vorgenannten Möglichkeiten nutzbar. Das gleiche gilt hinsichtlich der Ausbildung der Rollen 59, 61 und Führungsprofile 30, 34.

Alle Ausführungsformen können dahingehend abgewandelt werden, dass der Zahnkranz 28 an der radial jeweils anderen Seite des betreffenden Führungsprofils 30, 34 angeordnet ist. Eine Abwandlung ist weiter möglich, indem der Zahnkranz 28 alternativ jeweils an dem anderen der beiden Führungsprofile 30, 34 angeordnet wird.

Bei allen Ausführungsformenliegen die Rollen 59, 61 (und alle anderen) vorzugsweise vorspannungslos oder mit Spiel an den jeweiligen Laufbahnen 31, 35 an. Dies vermindert den Rollwiderstand.

Die erfindungsgemäße Antriebseinheit 19 für leichte Fahrzeuge, insbesondere Fahrräder, umfasst eine Radeinheit 20 und eine Motoreinheit 21. Die Radeinheit 20 weist einen Zahnkranz 27 und mindestens eine, vorzugsweise zwei Führungsbahnen 31, 25 auf, auf denen die sonst beweglich gelagerte jedoch bezüglich der Umfangsrichtung an den Rahmen 11 angebundene Motoreinheit 21 fährt. Es ist somit eine reitende Lagerung für die Motoreinheit 21 an der Radeinheit 20 gebildet. Auf diese Weise wird auch bei extremen Leichtbau, wie bei Fahrrädern anzutreffen ist und sportlichen Einsatz, immer ein sauberer Zahneingriff zwischen dem radseitigen Radkranz 27 und dem antriebsseitigen Antriebsritzel 45 erreicht.

### Bezugszeichenliste:

- 10: Fahrrad
- 11: Rahmen
- 12: Gabel
- 13: Lenker
- 14: Sattel
- 15: Vorderrad
- 16: Hinterrad
- 17: Tretkurbel
- 18: Kette
- 19: Antriebseinheit
- 20: Radeinheit
- 21: Motoreinheit
- 22: Ringscheibe
- 23: Rad-Verbindungsmittel
- 24: Speichen
- 25: Schrauben
- 26: Langlöcher
- 27: Zahnkranz
- 28: Verzahnung des Zahnkranzes 27
- 29: Schrauben
- 30: Führungsprofil
- 31: Laufbahn
- 32: Rand
- 33: Rand
- 34: Führungsprofil
- 35: Laufbahn
- 36: Ringelement
- 37: Rand
- 38: Rand
- 39: Motorträger
- 40: Haube
- 41: Innenraum
- 42: Elektromotor
- 43: Getriebe
- 44: Antriebswelle
- 45: Antriebsritzel
- 46: Verzahnung des Antriebsritzels 45
- 47: Stirnrad
- 48: Motorritzel
- 49: Abtriebswelle des Elektromotors 42
- 50: Schalteinheit
- 51: Axialer Wellenantrieb/Axialstellantrieb
- 52: Ringnut
- 53: Hülse
- 54: Drehmomentstütze
- 55: Lenker
- 56: Bolzen
- 57: Motor
- 58: Abtriebswelle
- 59: Erstes Führungsrad der Führungsbahn 31
- 60: Zweites Führungsrad der Führungsbahn 31
- 61: Erstes Führungsrad der Führungsbahn 35
- 62: Zweites Führungsrad der Führungsbahn 35
- 63: Lenker
- 64: Rahmenklemmschelle
- 65: Gelenk
- 66: Gelenk
- 67: Ringkörper
- 68: Schenkel
- 69: Schenkel
- 70: Abschlussring
- 71: Abschlussring
- 72: Metallschiene
- 73: Metallschiene
- 74:
- 75:
- 76:
- 77:
- 78:
- 79:

## Patentansprüche

1. Antriebseinheit (19) für elektrisch angetriebenes oder unterstütztes Zweiradfahrzeug (10),
mit einem Zahnkranz (27), der eine Verzahnung (28) aufweist und mit Rad-Verbindungsmitteln (23) zum Anschluss an ein Fahrzeugrad (16) versehen ist,
mit mindestens einem Führungsprofil (30), das konzentrisch zu dem Zahnkranz (27) angeordnet ist,
mit einem Motorträger (39), der mit einem Abstützmittel (54) zum Anschluss an einen Fahrzeugrahmen (11) versehen ist,
mit einem Elektromotor (42), der auf dem Motorträger (39) angeordnet ist,
mit einem Antriebsritzel (45), das mit dem Elektromotor (42) treibend verbunden ist, eine zu der Verzahnung (28) des Zahnkranzes (27) passende Verzahnung (46) aufweist und dem Zahnkranz (27) betriebsmäßig zugeordnet ist,
mit mindestens einem Führungsrad (59), das dem Führungsprofil (30) zugeordnet und an dem Motorträger (39) drehbar gelagert ist.

2. Antriebseinheit nach Anspruch 1, **dadurch gekennzeichnet, dass** die Rad-Verbindungsmittel (23) zum Anschluss an Radspeichen (24) eingerichtet sind.

3. Antriebseinheit nach Anspruch 1, **dadurch gekennzeichnet, dass** das Führungsprofil (30) und das Führungsrad (59) an einer von der Verzahnung (28) des Zahnkranzes (27) weg weisenden Seite angeordnet sind.

4. Antriebseinheit nach Anspruch 1, **dadurch gekennzeichnet, dass** zumindest zwei Führungsräder (59, 61) vorgesehen sind, die unterschiedlichen, zueinander konzentrisch angeordneten Führungsprofilen (30, 36) zugeordnet sind.

5. Antriebseinheit nach Anspruch 4, **dadurch gekennzeichnet, dass** zumindest einem der beiden Führungsprofile (30, 36) zumindest zwei Führungsräder (59, 60; 61, 62) zugeordnet sind.

6. Antriebseinheit nach Anspruch 1, **dadurch gekennzeichnet, dass** das Antriebsritzel (45) zwischen einer Eingriffsposition, in der es mit dem Zahnkranz (27) in Eingriff steht, und einer Freilaufposition, in der es außer Eingriff mit der Verzahnung (28) Zahnkranzes (27) steht, beweglich gelagert ist.

7. Antriebseinheit nach Anspruch 6, **dadurch gekennzeichnet, dass** eine Ausrückeinheit (50) zum axialen oder radialen Bewegen des Antriebsritzels (45) vorgesehen ist, um es mit dem Zahnkranz (27) in und außer Eingriff zu überführen.

8. Antriebseinheit nach Anspruch 7, **dadurch gekennzeichnet, dass** das Antriebsritzel und der Motor (42) gemeinsam axial bewegbar angeordnet sind.

9. Antriebseinheit nach Anspruch 1, **dadurch gekennzeichnet, dass** zwischen dem Motor (42) und dem Zahnkranz (27) eine Kupplung angeordnet ist.

10. Antriebseinheit nach Anspruch 1, **dadurch gekennzeichnet, dass** der Motorträger (39) über das Abstützmittel (54) an dem Zweiradfahrzeug (11) beweglich gelagert ist.

11. Antriebseinheit nach Anspruch 1, **dadurch gekennzeichnet, dass** das Abstützmittel (54) eine Strebe (55) umfasst, die wenigstens eine Gelenkeinrichtung (65) umfasst.

12. Antriebseinheit nach Anspruch 11, **dadurch gekennzeichnet, dass** die Strebe (55) im Wesentlichen tangential zu dem Zahnkranz (27) orientiert ist.

## Claims

1. Drive unit (19) for electrically driven or assisted two-wheeled vehicle (10), with a sprocket wheel (27), which has a tooth arrangement (28) and is provided with wheel connection elements (23) for connection to a vehicle wheel (16),
with at least one guide profile (30), which is arranged concentrically to the sprocket wheel (27),
with a motor support (39), which is provided with a support element (54) for connection to a vehicle frame (11),
with an electric motor (42), which is arranged on the motor support (39),
with a driving pinion (45), which has drive connection to the electric motor (42), has a tooth arrangement (46) matching the tooth arrangement (28) of the sprocket wheel (27) and is associated operatively with the sprocket wheel (27),
with at least one guide wheel (59), which is associated with the guide profile (30) and is rotatably mounted on the motor support (39).

2. Drive unit according to claim 1, **characterised in that** the wheel connection elements (23) are arranged for connection to wheel spokes (24).

3. Drive unit according to claim 1, **characterised in that** the guide profile (30) and the guide wheel (59) are arranged on a side pointing away from the tooth arrangement (28) of the sprocket wheel (27).

4. Drive unit according to claim 1, **characterised in that** at least two guide wheels (59, 61) are provided, which are associated with different concentrically arranged guide profiles (30, 36).

5. Drive unit according to claim 4, **characterised in that** at least two guide wheels (59, 60; 61, 62) are associated with at least one of the two guide profiles (30, 36).

6. Drive unit according to claim 1, **characterised in that** the driving pinion (45) is mounted to be movable between an engagement position, in which it is engaged with the sprocket wheel (27), and a free-wheeling position, in which it is disengaged from the tooth arrangement (28) of the sprocket wheel (27).

7. Drive unit according to claim 6, **characterised in that** a release unit (50) is provided for axial or radial movement of the driving pinion (45) to shift it in and out of engagement with the sprocket wheel (27).

8. Driving unit according to claim 7, **characterised in that** the driving pinion and the motor (42) are arranged to be jointly axially movable.

9. Drive unit according to claim 1, **characterised in that** a coupling is arranged between the motor (42) and the sprocket wheel (27).

10. Drive unit according to claim 1, **characterised in that** the motor support (39) is movably mounted on the two-wheel vehicle (11) by means of the support element (54).

11. Drive unit according to claim 1, **characterised in that** the support element (54) comprises a strut (55), which comprises at least one link arrangement (65).

12. Drive unit according to claim 11, **characterised in that** the strut (55) is oriented substantially tangentially to the sprocket wheel (27).

## Revendications

1. Unité d'entraînement (19) pour véhicule à deux roues entraîné ou assisté électriquement (10), comprenant une couronne dentée (27) qui comporte une denture (28) et est munie de moyens de liaison à la roue (23) pour la relier à une roue de véhicule (16), comprenant au moins un profilé de guidage (30) disposé concentriquement à la couronne dentée (27), comprenant un support de moteur (39) muni d'un moyen d'appui (54) pour le relier à un cadre de véhicule (11), comprenant un moteur électrique (42) disposé sur le support de moteur (39), comprenant un pignon d'entraînement (45) qui est relié de manière menée au moteur électrique (42), comporte une denture (46) adaptée à la denture (28) de la couronne dentée (27) et, en termes de transmission, est associé à la couronne dentée (27), comprenant au moins une roue de guidage (59) qui est associée au profilé de guidage (30) et est montée à rotation sur le support de moteur (39).

2. Unité d'entraînement selon la revendication 1, **caractérisée en ce que** les moyens de liaison à la roue (23) sont agencés pour être reliés à des rayons de roue (24).

3. Unité d'entraînement selon la revendication 1, **caractérisée en ce que** le profilé de guidage (30) et la roue de guidage (59) sont disposés sur un côté orienté à l'opposé de la denture (28) de la couronne dentée (27).

4. Unité d'entraînement selon la revendication 1, **caractérisée en ce qu'**il est prévu au moins deux roues de guidage (59, 61) qui sont associées à différents profilés de guidage (30, 36) concentriques l'un à l'autre.

5. Unité d'entraînement selon la revendication 4, **caractérisée en ce qu'**au moins à un des deux profilés de guidage (30, 36) sont associées au moins deux roues de guidage (59, 60 ; 61, 62).

6. Unité d'entraînement selon la revendication 1, **caractérisée en ce que** le pignon d'entraînement (45) est monté mobile entre une position d'engrènement, dans laquelle il est engrené dans la couronne dentée (27), et une position de roue libre, dans laquelle il est désengrené de la denture (28) de la couronne dentée (27).

7. Unité d'entraînement selon la revendication 6, **caractérisée en ce qu'**une unité de débrayage (50) est prévue pour déplacer le pignon d'entraînement (45) axialement ou radialement afin de l'amener à s'engrener dans la couronne dentée (27) ou à se désengrener de celle-ci.

8. Unité d'entraînement selon la revendication 7, **caractérisée en ce que** le pignon d'entraînement et le moteur (42) sont disposés de façon à pouvoir se déplacer conjointement dans le sens axial.

9. Unité d'entraînement selon la revendication 1, **caractérisée en ce qu'**entre le moteur (42) et la couronne dentée (27) est disposé un moyen d'accouplement.

10. Unité d'entraînement selon la revendication 1, **caractérisée en ce que** le support de moteur (39) est monté mobile sur le véhicule à deux roues (11) par l'intermédiaire du moyen d'appui (54).

11. Unité d'entraînement selon la revendication 1, **caractérisée en ce que** le moyen d'appui (54) comprend un bras (55) qui comporte au moins un dispositif d'articulation (65).

12. Unité d'entraînement selon la revendication 11, **caractérisée en ce que** le bras (55) est orienté sensiblement tangentiellement à la couronne dentée (27).
